# DEMANDE DE BREVET EUROPEEN

(11) **EP 4 420 809 A1**
(43) Date de publication de la demande: **28.08.2024**
(21) Numéro de dépôt: 23158821.1
(22) Date de dépôt: 27.02.2023
(51) Int. Cl.: B22F 3/10, B22F 3/22, B22F 10/10, B33Y 10/00, C22C 1/04, C22C 5/00, C22C 5/08

(54) **PROCEDE DE FABRICATION D'UNE PIECE EN ALLIAGE DE METAL PRECIEUX**

(71) Demandeur: Richemont International S.A., 1752 Villars-sur-Glâne (CH)
(72) Inventeur: BIHR, Jean Claude, 25410 Saint-Vit (FR); STIEFVATER, Jean-Karl, 25550 Présentevillers (FR); GIRAUD, Damien, 90100 Joncherey (FR)
(74) Mandataire: Cabinet Laurent & Charras

(57) **Abrégé**

La présente invention concerne un procédé de fabrication d'une pièce en métal comprenant les étapes suivantes :
(a) mise en forme d'un mélange comprenant une poudre métallique et un liant,
la poudre métallique comprenant des particules d'un alliage choisi dans le groupe constitué des alliages suivants :
^{∗} alliages d'or contenant au moins 583 %o en poids d'or, et entre 7,5 et 300 %o en poids de cuivre ; la quantité d'or et de cuivre n'excédant pas 1000 %o,
^{∗} alliages d'argent contenant au moins 900 %o en poids d'argent, et 10 à 100 %o en poids de cuivre ; la quantité d'argent et de cuivre n'excédant pas 1000 %o,
^{∗} alliages de platine contenant au moins 930 %o de platine, et 7,5 à 50 %o de cuivre ; la quantité de platine et de cuivre n'excédant pas 1000 ‰,
la mise en forme du mélange permettant de former une pièce verte,

(b) déliantage et oxydation de la pièce verte pour former une pièce marron,
le déliantage étant réalisé par voie thermique ou par voie chimique,
l'oxydation étant réalisée en présence d'oxygène,

(c) désoxydation de la pièce marron sous atmosphère réductrice,
(d) frittage de la pièce déliantée,
(e) optionnellement, compaction isostatique à chaud de la pièce frittée.

## Description

### DOMAINE DE L'INVENTION

La présente invention concerne un procédé permettant de fabriquer une pièce en alliage de métal précieux (or, argent ou platine), mais aussi la pièce résultant de ce procédé et son utilisation dans l'industrie du luxe, notamment dans les domaines de la joaillerie et de l'horlogerie.

### ETAT ANTERIEUR DE LA TECHNIQUE

La fabrication d'objets à base d'alliage de métaux précieux tels que l'or, l'argent ou le platine peut être réalisée de diverses manières. Par exemple, les objets peuvent être formés par moulage à partir de l'alliage fondu ou par fabrication additive à partir de particules métalliques. Les alternatives à la formation par moulage incluent notamment le corroyage (laminage, cycles thermiques), le découpage et l'usinage.

Certains procédés impliquent la formation de pièces intermédiaires appelées pièce verte (green body) et pièce marron (brown body), ainsi qu'une étape de frittage, selon les étapes suivantes :
- formation d'une pièce verte à partir de particules métalliques et d'un liant,
- formation d'une pièce marron par traitement thermique de la pièce verte,
- frittage de la pièce marron.

La présence du liant permet notamment d'améliorer la formation de la pièce verte et/ou de la pièce marron en agglomérant les particules métalliques entre elles. Ce liant est éliminé lors d'une étape de déliantage.

Le document CH 715619 décrit un procédé de fabrication d'une pièce résultant de l'alliage entre un métal précieux (or, argent, platine, palladium, ruthénium ou iridium) et le bore. Ce procédé permet de former des alliages binaires à partir de poudre d'un métal pur et de poudre de bore micrométrique nano-structuré.

Le document US 2021/0162502 décrit un procédé de fabrication additive d'une structure composite comprenant une composition liante et une poudre de métal. Les conditions de ce procédé permettent de limiter, voire d'éviter, l'oxydation du cuivre.

Le document WO 2021/16242 décrit la fabrication de pièces métalliques mettant en oeuvre un usinage à commande numérique informatique avant une étape de frittage. Ce document ne décrit pas de pièces métalliques à base d'un alliage comprenant du cuivre.

Les pièces intermédiaires (pièce verte et pièce marron) sont généralement difficiles à manipuler car elles restent fragiles, voire effritables en raison de leur faible tenue mécanique. Elles peuvent donc engendrer des pertes conséquentes (rebuts) comme des pièces abimées, fissurées ou ne pouvant pas être frittés. C'est particulièrement le cas pour la pièce marron obtenue après le déliantage de la pièce verte.

L'amélioration de la tenue mécanique de la pièce marron reste donc une problématique importante.

La présente invention propose de résoudre ce problème en améliorant les propriétés mécaniques de la pièce marron, notamment grâce à des étapes de déliantage et d'oxydation.

### EXPOSE DE L'INVENTION

Le Demandeur a mis au point un procédé de fabrication d'une pièce métallique permettant d'améliorer les propriétés mécaniques d'une pièce marron déliantée grâce à la présence de cuivre dans l'alliage utilisé. Ce procédé implique une étape de déliantage sous atmosphère oxydante.

Ce procédé peut notamment être mis en oeuvre dans le cadre d'une des technologies suivantes :
- la projection de liant ou le j et de liant (binder j etting),
- la fabrication additive par MoldJet^{®},
- le gel casting,
- la fabrication additive métallique (MIM « métal injection molding »),
- la fabrication additive par extrusion d'un mélange de poudre métallique et de liant, par exemple le dépôt fil fondu (FDM « Fused Déposition Modelling » ou FFF « Fused Filament Fabrication »).

Plus précisément, la présente invention concerne un procédé de fabrication d'une pièce en métal comprenant notamment les étapes suivantes :
(a) mise en forme d'un mélange comprenant une poudre métallique et un liant,
   la poudre métallique comprenant des particules d'un alliage choisi dans le groupe constitué des alliages suivants :
   * alliages d'or contenant au moins 583 ‰ (≥ 14 carats en poids d'or, et entre 7,5 et 250 ‰ en poids de cuivre ; la quantité d'or et de cuivre n'excédant pas 1000 ‰,
   * alliages d'argent contenant au moins 900 %o en poids d'argent, et 10 à 100 %o en poids de cuivre ; la quantité d'argent et de cuivre n'excédant pas 1000 %o,
   * alliages de platine contenant au moins 930 %o de platine, et 7,5 à 50 %o de cuivre ; la quantité de platine et de cuivre n'excédant pas 1000 ‰,
   la mise en forme du mélange permettant de former une pièce verte (ou « green body » en anglais),
(b) déliantage et oxydation de la pièce verte pour former une pièce marron (ou « brown body » en anglais),
   le déliantage étant réalisé par voie thermique ou par voie chimique,
   l'oxydation étant réalisée en présence d'oxygène (par exemple de l'oxygène pur, de l'air, ou un mélange d'argon et d'oxygène),
(c) désoxydation de la pièce marron sous atmosphère réductrice à une température T_{dés},
(d) frittage (avantageusement sous atmosphère inerte ou réductrice) de la pièce déliantée à une température T_{fri} supérieure à la température T_{dés},
(e) optionnellement, compaction isostatique à chaud de la pièce frittée.

L'homme du métier saura adapter les conditions des étapes en fonction de la nature de l'alliage et du liant.

De manière générale, la température de l'étape (d) est supérieure à celles des étapes (a), (b) et (c).

Préalablement à l'étape (b), le procédé peut comprendre une étape de réticulation du liant, avantageusement par voie thermique. Cette étape permet de faciliter la manipulation de la pièce verte.

Selon un mode de réalisation particulier, le procédé de fabrication peut comprendre des étapes intermédiaires. Il peut notamment s'agir d'une étape d'usinage ou de meulage ou d'autre potentielles finitions de surface sur la pièce verte et/ou sur la pièce marron avant le frittage de l'étape (d).

De manière générale, la fabrication n'inclut pas l'usinage et/ou la finition pouvant être réalisés sur la pièce frittée résultant de l'étape (e). L'usinage et la finition de la pièce frittée constituent des étapes post-fabrication.

Le procédé selon l'invention peut également être mis en oeuvre en présence d'un autre type de réactif afin de remplacer l'oxygène de l'étape (b). Par exemple, il peut s'agir d'un réactif distinct de l'oxygène, d'une source de carbone ou d'une source d'azote. Ainsi, dans ce cas particulier, des nitrures ou des carbures peuvent être formés lors de l'étape (b), et l'étape (c) consiste à éliminer l'azote ou le carbone.

Le procédé selon l'invention peut également être mis en oeuvre sur un alliage comprenant 0 ou moins de 7,5 ‰ de cuivre. Dans ce cas, l'étape (b) ne permet pas (ou pas majoritairement) de former de l'oxyde cuivre (voir ci-après), mais un oxyde d'un autre métal ou des nitrures ou des carbures de ce métal si l'oxygène est substitué par une source de carbone ou d'azote.

### Alliage

De manière avantageuse, la poudre métallique de l'étape (a) comprend des particules d'un alliage choisi parmi : les alliages constitués d'or, d'argent et de cuivre ; les alliages constitués d'or, de palladium et de cuivre ; les alliages constitués d'or et de cuivre ; les alliages constitués d'or, de palladium, d'argent et de cuivre ; les alliages constitués d'argent et de cuivre ; les alliages constitués de platine et de cuivre ; et les alliages constitués de platine, de cuivre et de gallium. Cet alliage est avantageusement dépourvu de bore.

Lorsque l'alliage est à base d'or (au moins 583 ‰ soit au moins 14 carats), il comprend avantageusement au moins 750 ‰ d'or (18 carats), par exemple au moins 917 ‰ d'or (22 carats). Il peut notamment s'agir d'or jaune, d'or gris, d'or rose ou d'or rouge. L'alliage à base d'or est avantageusement choisi dans le groupe constitué de : Au₅₈₅Ag₃₂₀Cu₉₅ ; Au₅₈₅Ag₂₆₅Cu₁₅₀ ; Au₇₅₀Ag₁₆₀Cu₉₀ ; Au₇₅₀Ag₁₂₅Cu₁₂₅ ; Au₇₅₃Ag_{123,5}Cu_{123,5} ; Au₇₅₀Ag₉₀Cu₁₆₀ ; Au₇₅₀Ag₄₅Cu₂₀₅ ; Au₇₅₃Ag₄₄Cu₂₀₃ ; Au₇₅₃Ag_{43,5}Cu_{203,5} ; Au₇₅₁Pd₆₀Cu₁₈₉ ; Au₇₅₀Ag₃₀Pd₁₂₅Cu₉₅ ; Au₇₅₀Ag₅Pd₁₂₅Cu₁₀₀In₂₀ ; Au₇₅₃Ag₃₀Pd₁₂₅Cu₉₂ ; Au₇₅₀Pd₁₃₀Cu₁₀₀In₂₀ ; Au₇₅₀Pd₁₅₀Cu₄₀Fe₆₀ ; Au₇₅₃Pd₁₅₀Cu₃₉Fe₅₈ ; Au₇₅₀Ag₃₅Cu₂₁₅ ; Au₉₁₇Ag₂₁Cu₆₂ ; Au₉₁₇Cu₈₃ ; et Au₉₁₇Ag₅₅Cu₂₈.

Lorsque l'alliage est à base d'argent, il comprend avantageusement au moins 900 ‰ d'argent, plus avantageusement au moins 925 %o d'argent, par exemple Ag₉₂₈Cu₇₂.

Lorsque l'alliage est à base de platine, il comprend avantageusement au moins 930 %o de platine, par exemple 953 %o de platine. Dans ce cas, il est avantageusement choisi dans le groupe constitué de : Pt₉₅₀Cu_{7,5}Ga_{42,5}, Pt₉₅₃Cu₁₇Ga₃₀, Pt₉₇₅Cu_{12,5}Ga_{12,5}, Pt_{964,5}Cu_{28,2}Ga_{7,3}, Pt_{938,3}Cu_{42,7}Ga₁₉, et Pt₉₅₃Cu₄₇.

Préférentiellement, la poudre métallique de l'étape (a) comprend des particules d'un alliage contenant au moins 750 %o d'or et 39 à 215 %o de cuivre, le reste pour atteindre 1000 %o en poids étant un métal choisi parmi l'argent, le palladium, l'indium, le fer, et leurs mélanges.

Les particules de la poudre métallique de l'étape (a) présentent une granulométrie avantageusement comprise entre 1 et 100 µm, plus avantageusement entre 1 et 50 µm. La granulométrie correspond à la taille moyenne en volume des particules, par exemple le diamètre moyen lorsque les particules ont une forme sphérique. La granulométrie peut être mesurée avec tout type d'instrument conventionnel, par exemple par diffraction laser (à titre d'exemple un instrument de type Malvern Mastersizer). Ainsi, et quelle que soit la forme d'une particule, la granulométrie correspond au diamètre de la sphère diffusant de la même manière que la particule.

### Liant

Le liant est avantageusement un liant polymérique. Le liant est préférentiellement choisi dans le groupe constitué de : polymères d'acide acrylique, polyéthylène glycol, cellulose acétate butyrate, nano-cellulose, amidon de maïs, sucre, acide polylactique, polyéthylène, polypropylène, cire synthétique ou naturelle, et acide stéarique.

Le liant peut notamment être l'un des liants Aquafuse^{®} ou Cleanfuse^{®} commercialisés par la société ExOne, ou l'un des liants C20 ou DM925 commercialisés par la société Digital Métal.

### Etape (a)

L'étape (a) met en oeuvre un mélange comprenant (avantageusement constitué de) une poudre métallique et un liant.

Tout procédé permettant de former le mélange entre la poudre métallique et le liant peut être utilisé.

Ce mélange peut être préparé avant la mise en forme engendrant la formation de la pièce verte, par mise en contact entre le liant et la poudre métallique. Il peut s'agir de la formation d'un mélange par dépôt de liant, sous la forme de fil fondu, sur la poudre métallique, mais aussi de la formation d'un mélange de liant sous forme solide (par exemple sous la forme de granules ou de poudre), et de la poudre métallique. Selon un autre mode de réalisation, ce mélange peut se présenter sous la forme d'un slurry, par exemple une pâte plus ou moins visqueuse.

Ce mélange peut également être préparé pendant la mise en forme engendrant la formation de la pièce verte, par exemple dans un procédé de fabrication additive de la pièce en métal. Un mode de réalisation particulier concerne la fabrication additive par projection de liant sur la poudre métallique : dépôt du liant sur une fine couche de poudre métallique, couche par couche.

La mise en forme (bidimensionnelle ou tridimensionnelle) du mélange engendrant la formation de la pièce verte est avantageusement réalisée dans un dispositif de fabrication additive ou dans un moule. La mise en forme dans un dispositif de fabrication additive est progressive car elle est réalisée couche après couche, au fur et à mesure de la formation de la pièce verte.

La mise en forme est avantageusement réalisée à une température comprise entre 20 et 300°C, plus avantageusement entre 50 et 150°C. Par exemple, la mise en forme peut être réalisée à la température ambiante (en général entre 18 et 25°C).

La présence du liant facilite la manipulation de la pièce verte en améliorant ses propriétés mécaniques. En fonction de la nature du liant et/ou de la manière dont il est mis en contact avec la poudre métallique, le procédé peut comprendre une étape de réticulation du liant. C'est notamment le cas lorsque le liant et la poudre métallique forment un mélange pulvérulent.

Ainsi, la pièce verte présente des propriétés mécaniques et de dureté permettant de la manipuler.

Comme déjà indiqué, la mise en forme du mélange permet de générer la pièce verte.

### Etape (b)

Lors de l'étape (b), le liant est éliminé thermiquement ou chimiquement alors que le cuivre des particules d'alliage est oxydé formant ainsi une couche d'oxyde de cuivre. De manière générale, le cuivre n'est pas oxydé à l'intérieur des particules, il n'est oxydé qu'en surface des particules. Ainsi, la formation d'une couche d'oxyde de cuivre (CuO et/ou Cu₂O), autour des particules d'alliage, permet d'augmenter la tenue mécanique de la pièce marron et donc de rendre la pièce manipulable après l'élimination du liant. Plus précisément, l'oxyde de cuivre permet de créer des ponts entre les différentes particules, améliorant ainsi la cohésion mécanique grâce à la formation d'un réseau continu dans la pièce marron.

Le déliantage et l'oxydation de la pièce verte sont avantageusement réalisés simultanément, préférentiellement dans un four, préférentiellement un four exposé à l'air.

Comme déjà indiqué, le déliantage peut être réalisé par voie thermique ou par voie chimique (par exemple au moyen d'un solvant solubilisant le liant).

Le déliantage et l'oxydation de l'étape (b) sont avantageusement réalisés simultanément, sous oxygène, avantageusement pendant 20 à 720 minutes, plus avantageusement 120 à 360 minutes. Lorsque le déliantage est réalisé en l'absence d'oxygène (pas d'oxydation simultanée), il est avantageusement réalisé après l'oxydation. Dans ce cas, sa durée est également avantageusement comprise entre 20 et 720 minutes, plus avantageusement entre120 et 360 minutes.

Selon un mode de réalisation préféré, le déliantage par voie thermique est réalisé à une température comprise entre 300 et 800°C, plus avantageusement 500 à 700°C. L'homme du métier adaptera la température en fonction de la nature de la poudre métallique.

Le déliantage par voie thermique peut être réalisé dans un four exposé à l'air.

Le déliantage par voie thermique est avantageusement réalisé selon la séquence suivante :
- placer la pièce verte en présence d'oxygène, par exemple dans un four sous air, à la température T1 (en général entre 18 et 25°C),
- augmentation de la température T1 jusqu'à atteindre une température T2 comprise entre 200 et 500°C (avantageusement 400°C), préférentiellement en suivant une montée en température de 0.5 à 20°C/minute, avantageusement de 1 à 5°C/min, par exemple de 2°C/min,
- optionnellement, maintien de la pièce à la température T2 avantageusement pendant 10 à 240 minutes, plus avantageusement pendant 30 à 120 minutes, par exemple 60 minutes,
- le cas échéant, augmentation de la température T2 jusqu'à atteindre une température T3 comprise entre 300 et 800°C (avantageusement 500 à 650°C), préférentiellement en suivant une montée en température de 0.5 à 20°C/minute, avantageusement de 1 à 5°C/min, par exemple de 2°C/min,
- maintien de la pièce à une température comprise entre 300 et 800°C (avantageusement 500 à 650°C), avantageusement pendant 10 à 360 minutes, par exemple 120 minutes.

L'étape optionnelle consistant à maintenir la pièce à la température T2 peut optimiser le déliantage en libérant progressivement le liant.

Le déliantage permet également d'optimiser la formation d'une couche d'oxyde de cuivre autour des particules d'alliage, sans altérer l'élimination du liant. De manière générale, une partie seulement du cuivre est oxydée. A l'issue de l'étape (b), l'oxydation du cuivre est donc avantageusement partielle. Ainsi, à titre d'exemple pour les alliages d'or (≥ 14 carats), les particules d'alliages ainsi traitées peuvent présenter une teneur de cuivre oxydée de l'ordre de 30 à 210 %o (en poids) en fonction de la composition initiale de l'alliage.

Le déliantage par voie thermique est avantageusement suivi par le refroidissement de la pièce, par exemple jusqu'à atteindre la température ambiante (en général entre 18 et 25°C).

Selon un mode de réalisation particulier, le déliantage par voie chimique est réalisé à une température d'au moins 20 °C, avantageusement au moins 25 °C. Ainsi, le déliantage par voie chimique peut être associé à un traitement thermique simultané ou ultérieur.

Le déliantage par voie chimique peut être réalisé par mise en contact entre la pièce verte et un solvant du liant (réticulé ou non), par exemple un solvant organique. Lorsque la dissolution du liant est partielle, un traitement thermique peut être mis en oeuvre pour optimiser le déliantage et éventuellement réaliser l'oxydation simultanément.

Les conditions (température, durée...) de l'oxydation du cuivre sont identiques à celles décrites pour le déliantage (voie thermique ou chimique), notamment lorsque l'oxydation et le déliantage sont réalisés simultanément.

L'étape (b) de déliantage et d'oxydation permet d'obtenir une pièce marron (ou « brown body » en anglais) dépourvue de liant et présentant des propriétés mécaniques supérieures à celles de la pièce verte. En effet, l'oxyde de cuivre permet de former des ponts entre les différentes particules, améliorant ainsi la cohésion de la pièce. Cette étape permet donc de diminuer, voire de supprimer, les pertes pouvant résulter de la manipulation de la pièce marron avant l'étape (d) de frittage. La pièce marron déliantée selon l'étape (b) présente des propriétés mécaniques et de dureté améliorées par rapport aux pièces formées à partir d'un alliage dépourvu de cuivre, mais également par rapport aux pièces formées sous atmosphère inerte. Ces améliorations résultent de la présence de cuivre et de l'étape de l'oxydation.

De manière générale, l'étape (b) de déliantage et d'oxydation est réalisée à une température permettant d'oxyder le cuivre en présence d'oxygène, mais inférieure à la température de frittage de l'étape (e).

La pièce marron présente des propriétés mécaniques et de dureté permettant de la manipuler et de l'usiner par les méthodes d'usinage conventionnelles, par exemple la CFAO (conception et fabrication assistées par ordinateur), mais aussi la tribofinition ou le meulage.

### Etape (c)

L'étape (c) consiste à désoxyder la pièce marron sous atmosphère réductrice, par exemple un gaz réducteur, avantageusement en présence d'hydrogène (par exemple un mélange d'hydrogène et de gaz inerte tel que l'argon ou l'azote), plus avantageusement sous hydrogène.

La désoxydation de la pièce marron sous atmosphère réductrice est avantageusement réalisée à une température (T_{dés}) comprise entre 200 et 700 °C, avantageusement entre 400 et 700 °C.

La désoxydation permet de réduire (chimiquement) l'oxyde de cuivre en cuivre ayant un degré d'oxydation égal à 0, en éliminant l'oxygène de la pièce marron. Ainsi, la désoxydation correspond à la formation de Cu (0) par réduction des oxydes (CuO et/ou Cu₂O) formées lors de l'étape (b). Cette étape permet de limiter, voire de supprimer, les effets indésirables comme l'altération des propriétés mécaniques après le frittage qui pourraient résulter de la présence d'oxyde de cuivre.

L'étape (c) est avantageusement réalisée dans une enceinte dans laquelle l'étape (d) de frittage peut également être réalisée, par exemple un four.

### Etape (d)

Le frittage de la pièce marron déliantée peut être réalisé sous atmosphère réductrice.

Le frittage peut être réalisé dans un mélange de gaz réducteur et de gaz inerte ou sous atmosphère inerte (avantageusement argon ou azote).

De manière avantageuse, le frittage de l'étape (d) est réalisé dans un four, préférentiellement dans un four dans lequel la désoxydation de l'étape (c) a été préalablement réalisée. Ainsi, la désoxydation de l'étape (c) et le frittage de l'étape (d) sont réalisés, successivement, dans un four.

Le frittage est avantageusement réalisé à une température (T_{fri}) comprise entre :
- 750 et 1100°C, plus avantageusement entre 850 et 1060°C, pour les alliages d'or,
- 750 et 1100°C , plus avantageusement entre 850 et 1000°C, pour les alliages d'argent,
- 1100 et 1950 °C, plus avantageusement entre 1400 et 1850°C, pour les alliages de platine.

La pièce marron déliantée est frittée pendant une durée avantageusement comprise entre 20 minutes et 500 minutes, préférentiellement entre 20 minutes et 300 minutes, plus avantageusement entre 30 et 180 minutes.

De manière générale, le frittage permet de durcir la pièce et donc de la consolider.

### Etape (e)

Le procédé selon l'invention peut comprendre une étape optionnelle de compaction isostatique à chaud de la pièce frittée.

Cette étape (e) est préférentiellement réalisée dans une presse isostatique comprenant une enceinte pouvant être chauffée et mise sous pression.

La compaction isostatique à chaud est réalisée à une température avantageusement comprise entre 700 et 850°C.

La compaction isostatique à chaud est avantageusement réalisée sous une pression de gaz inerte (préférentiellement l'azote ou l'argon), de préférence en soumettant la pièce frittée à une pression comprise entre 10⁸ et 2.10⁸ Pa.

De manière avantageuse, la pièce frittée est soumise à la compaction isostatique à chaud pendant une durée comprise entre 20 et 60 minutes.

Par exemple la compaction isostatique à chaud peut être réalisée à une température comprise entre 700°C et 850°C, pendant une durée comprise entre 20 et 60 minutes, sous une pression d'argon comprise entre 10⁸ et 2.10⁸ Pa.

Cette étape permet également d'améliorer les propriétés mécaniques et la dureté de la pièce, notamment en diminuant la porosité de la pièce et donc en augmentant sa densité. Avantageusement, après cette étape, la pièce présente une densité supérieure à 99 %, préférentiellement 99,5 %, encore plus préférentiellement 99,9 %.

Cette étape permet en outre d'améliorer l'usinabilité de la pièce.

### Pièce issue du procédé de fabrication d'une pièce en métal

La pièce en métal issue de l'étape (e) de frittage peut être utilisée sans traitement supplémentaire. Elle peut également être usinée selon les méthodes d'usinage conventionnelles, par exemple le tournage, le fraisage, le perçage, l'alésage, ou selon des méthodes d'usinage laser... Elle peut également être soumise à une étape de finition, notamment un polissage.

L'étape (e) peut notamment inclure au moins un post traitement de type tribofinition, sablage, usinage ou pré usinage...

Ainsi, la pièce en métal en métal issue du procédé selon l'invention peut être utilisée dans de nombreux domaines.

La présente invention permet de former une pièce en métal dont les propriétés permettent de l'utiliser dans de nombreux domaines et, plus particulièrement, dans l'industrie du luxe.

Aussi, la présente invention concerne également un article comprenant cette pièce en métal ou étant constitué de celle-ci. Il peut notamment s'agir d'un article d'horlogerie, d'un article de joaillerie, d'un article de maroquinerie ou d'un article d'écriture.

Par article d'horlogerie, on désigne notamment les boitiers de montre, les couronnes, les poussoirs, les cadrans, les bracelets métalliques de montres, les fermoirs, les pièces mécaniques d'un mouvement horloger (masse oscillante, balancier, platine, pont...)...

Par article de joaillerie, on désigne les articles de bijouterie (colliers, pendentifs, chaines, bagues, boucles d'oreilles, bracelets, broches, diadèmes et autres bijoux), mais également les ornements, par exemple les accessoires de mode (boutons de manchette, pinces à billet, pinces à cheveux...).

Par article de maroquinerie, on désigne notamment les objets métalliques tels que les boucles de ceinture, les fermoirs de sac à main...

Par article d'écriture, on désigne notamment les stylos, les coupe papiers...

### EXEMPLES

Des pièces ont été préparées selon les étapes (a) à (e) du procédé objet de l'invention. Ces pièces sont sous la forme de pastilles ayant les dimensions suivantes : 6mm de hauteur et 4mm de diamètre.

Des mesures de taux de carbone (éventuels résidus provenant du liant) ont été réalisés sur les pièces, sur une machine HORIBA emia-320V2. Ces mesures ont été réalisées avant (GB) et après (BB) l'étape (b) de déliantage et d'oxydation (475°C sous air).

Le tableau 1 ci-dessous récapitule le taux de carbone mesuré (ppm en poids par rapport au poids de la pièce) pour plusieurs échantillons de pièces identiques préparées à partir de l'alliage Au₇₅₀Ag₄₅Cu₂₀₅, du liant Aquafuse^{®} commercialisé par la société ExOne.

**Tableau 1 : Taux de carbone des pièces (GB = pièce verte ; BB = pièce marron)**

| Echantillon | Taux de carbone (ppm) |
|---|---|
| GB-1 | 2726 |
| GB-2 | 2598 |
| GB-3 | 2694 |
| BB-1 | 89 |
| BB-2 | 53 |
| BB-3 | 31 |

Ces pièces présentent un taux de carbone important avant l'étape (b) (déliantage+oxydation) en raison du caractère organique du liant utilisé.

Après l'étape de déliantage/oxydation, le taux de carbone est relativement bas.

Des essais de compression ont été réalisés sur des pièces marron de pièces identiques préparées à partir de l'alliage Au₇₅₀Ag₄₅Cu₂₀₅, du liant Aquafuse^{®} commercialisé par la société ExOne.

Le protocole est le suivant :
- Machine d'essai : Instron 3366
- Cellule de force : 10 kN
- Extensomètre : capteur LVDT 2.5mmfs 5500/8800
- Plateaux de compression ayant un diamètre de 150 mm (Acier inoxydable durci et chromé)
- Norme : ASTM E9-09

Méthode d'acquisition :
- Précharge : 2 mm/min
- 500N
- Vitesse pendant l'essai : 0.5 mm/min.

Le tableau 2 récapitule les valeurs de contrainte de compression obtenues avant (pièce verte) et après un déliantage sous oxygène à 580°C (exemples 1 à 7).

Le tableau 2 récapitule également les valeurs de contrainte de compression obtenues après un déliantage sous argon à 580°C (exemples comparatifs 8 à 11).

**Tableau 2 : Contrainte de compression des pièces vertes et des pièces déliantées sous oxygène (invention, exemples 1-7) ou sous argon (exemples comparatifs 8-11)**

| Echantillon | Contrainte de la pièce verte (MPa) | Contrainte de la pièce déliantée (MPa) |
|---|---|---|
| 1 | 10,0 | 317,1 |
| 2 | 9,1 | 194,1 |
| 3 | 7.8 | 186,2 |
| 4 | 11,0 | 195,4 |
| 5 | 9,9 | 192,1 |
| 6 | 11,1 | 220,5 |
| 7 | 11,6 | 186,0 |
| 8 | - | 3,5 |
| 9 | - | 4,2 |
| 10 | - | 3,1 |
| 11 | - | 2,7 |

De manière générale, les valeurs de compression des pièces résultant d'un déliantage sous atmosphère inerte (argon, tableau 3) sont extrêmement basses (2,7 à 4,2 MPa) par rapport à celles des pièces déliantées en présence d'oxygène (186,0 à 317,1 MPa).

Ces résultats montrent l'amélioration de la tenue mécanique de la pièce marron grâce à la réalisation de l'étape de déliantage dans des conditions oxydantes.

## Revendications

1. Procédé de fabrication d'une pièce en métal comprenant les étapes suivantes :
(a) mise en forme d'un mélange comprenant une poudre métallique et un liant,
la poudre métallique comprenant des particules d'un alliage choisi dans le groupe constitué des alliages suivants :
* alliages d'or contenant au moins 583 %o en poids d'or, et entre 7,5 et 300 %o en poids de cuivre ; la quantité d'or et de cuivre n'excédant pas 1000 ‰,
* alliages d'argent contenant au moins 900 %o en poids d'argent, et 10 à 100 %o en poids de cuivre ; la quantité d'argent et de cuivre n'excédant pas 1000 ‰,
* alliages de platine contenant au moins 930 %o de platine, et 7,5 à 50 %o de cuivre ; la quantité de platine et de cuivre n'excédant pas 1000 ‰,
la mise en forme du mélange permettant de former une pièce verte,
(b) déliantage et oxydation de la pièce verte pour former une pièce marron,
le déliantage étant réalisé par voie thermique ou par voie chimique,
l'oxydation étant réalisée en présence d'oxygène,
(c) désoxydation de la pièce marron sous atmosphère réductrice à une température T_{dés},
(d) frittage de la pièce déliantée à une température T_{fri} supérieure à la température T_{dés},
(e) optionnellement, compaction isostatique à chaud de la pièce frittée.

2. Procédé selon la revendication 1, ***caractérisé* en ce que** la poudre métallique de l'étape (a) comprend des particules d'un alliage choisi dans le groupe constitué de : les alliages constitués d'or, d'argent et de cuivre ; les alliages constitués d'or, de palladium et de cuivre ; les alliages constitués d'or et de cuivre ; les alliages constitués d'or, de palladium, d'argent et de cuivre ; les alliages constitués d'argent et de cuivre ; les alliages constitués de platine et de cuivre ; et les alliages constitués de platine, de cuivre et de gallium.

3. Procédé selon la revendication 1, ***caractérisé* en ce que** la poudre métallique de l'étape (a) comprend des particules d'un alliage choisi dans le groupe constitué de : Au₅₈₅Ag₃₂₀Cu₉₅ ; Au₅₈₅Ag₂₆₅Cu₁₅₀ ; Au₇₅₀Ag₁₆₀Cu₉₀ ; Au₇₅₀Ag₁₂₅Cu₁₂₅ ; Au₇₅₃Ag_{123,5}Cu_{123,5} ; Au₇₅₀Ag₉₀Cu₁₆₀ ; Au₇₅₀Ag₄₅Cu₂₀₅ ; Au₇₅₃Ag₄₄Cu₂₀₃ ; Au₇₅₃Ag_{43,5}Cu_{203,5} ; Au₇₅₁Pd₆₀Cu₁₈₉ ; Au₇₅₀Ag₃₀Pd₁₂₅Cu₉₅ ; Au₇₅₀Ag₅Pd₁₂₅Cu₁₀₀In₂₀ ; Au₇₅₃Ag₃₀Pd₁₂₅Cu₉₂ ; Au₇₅₀Pd₁₃₀Cu₁₀₀In₂₀ ; Au₇₅₀Pd₁₅₀Cu₄₀Fe₆₀ ; Au₇₅₃Pd₁₅₀Cu₃₉Fe₅₈ ; Au₇₅₀Ag₃₅Cu₂₁₅ ; Au₉₁₇Ag₂₁Cu₆₂ ; Au₉₁₇Cu₈₃ ; Au₉₁₇Ag₅₅Cu₂₈ ; Ag₉₂₈Cu₇₂ ; Pt₉₅₀Cu_{7,5}Ga_{42,5} ; Pt₉₅₃Cu₁₇Ga₃₀ ; Pt₉₇₅Cu_{12,5}Ga_{12,5} ; Pt_{964,5}Cu_{28,2}Ga_{7,3} ; Pt_{938,3}Cu_{42,7}Ga₁₉ ; et Pt₉₅₃Cu₄₇.

4. Procédé selon l'une des revendications précédentes, ***caractérisé* en ce que** la mise en forme de l'étape (a) est réalisé dans un dispositif de fabrication additive ou dans un moule.

5. Procédé selon l'une des revendications précédentes, ***caractérisé* en ce que** le liant de l'étape (a) est choisi dans le groupe constitué de : polymères d'acide acrylique, polyéthylène glycol, cellulose acétate butyrate, nano-cellulose, amidon de maïs, sucre, acide polylactique, polyéthylène, polypropylène, cire synthétique ou naturelle, et acide stéarique.

6. Procédé selon l'une des revendications précédentes, ***caractérisé* en ce que**, à l'issue de l'étape (b), le cuivre de l'alliage est partiellement oxydé.

7. Procédé selon l'une des revendications précédentes, ***caractérisé* en ce que** le déliantage est réalisé par voie thermique, simultanément à l'oxydation, à une température comprise entre 300 et 800°C, pendant 20 à 720 minutes.

8. Procédé selon l'une des revendications précédentes, ***caractérisé* en ce que** le déliantage est réalisé par voie thermique selon la séquence suivante :
- placer la pièce verte en présence d'oxygène, à une température T1 comprise entre 18 et 25°C,
- augmentation de la température T1 jusqu'à atteindre une température T2 comprise entre 200 et 500°C,
- le cas échéant, augmentation de la température T2 jusqu'à atteindre une température T3 comprise entre 300 et 800°C,
- maintien de la pièce à une température comprise entre 300 et 800°C pendant 10 à 360 minutes.

9. Procédé selon la revendication 8, ***caractérisé* en ce que** la température T2 est maintenue pendant 10 à 240 minutes.

10. Procédé selon l'une des revendications précédentes, ***caractérisé* en ce que** la désoxydation de l'étape (c) est réalisée en présence d'hydrogène, à une température T_{dés} comprise entre 200 et 700°C.

11. Procédé selon l'une des revendications précédentes, ***caractérisé* en ce que** le frittage de l'étape (d) est réalisé sous atmosphère réductrice ou inerte.

12. Procédé selon l'une des revendications précédentes, ***caractérisé* en ce que** la désoxydation de l'étape (c) et le frittage de l'étape (d) sont réalisés, successivement, dans un même four ou dans deux fours distincts.

13. Procédé selon l'une des revendications précédentes, ***caractérisé* en ce que** le frittage de la pièce marron déliantée présente une durée comprise entre 20 minutes et 500 minutes.

14. Procédé selon l'une des revendications précédentes, ***caractérisé* en ce que** la compaction isostatique à chaud de l'étape (e) est réalisée à une température comprise entre 700 et 850°C.

15. Procédé selon l'une des revendications précédentes, ***caractérisé* en ce que** le procédé comprend au moins une étape choisie parmi l'usinage, le meulage et les finitions de surface, réalisée sur la pièce verte et/ou sur la pièce marron avant l'étape (d) de frittage.
